# FASCICULE DE BREVET EUROPEEN

(11) **EP 1 541 506 B1**
(45) Date de publication et mention de la délivrance du brevet: **13.02.2008**
(21) Numéro de dépôt: 04300880.4
(22) Date de dépôt: 10.12.2004
(51) Int. Cl.: B65G 27/30, B65G 47/66

(54) **Dispositif de transfert de pièces à sole vibrante notamment de pièces à équilibre précaire**
Transfervorrichtung mit einer Vibrationsplatte, insbesondere für instabile Gegenstände
Article transfer device having a vibrating plate, especially for unstable articles

(30) Priorité: 12.12.2003 FR 0351041
(43) Date de publication de la demande: 15.06.2005
(73) Titulaire: Sinex Industrie, 16400 La Couronne (FR)
(72) Inventeur: Couraud, Gilbert, 16400 La Couronne (FR); Broussard, Jean-Luc, 16430 Champniers (FR)
(74) Mandataire: Fantin, Laurent

(56) Documents cités:
- US-A- 3 548 996
- US-A- 5 713 457
- US-A1- 2002 100 663
- US-B1- 6 182 718

## Description

La présente invention concerne un dispositif de transfert à sole vibrante pour le transfert de pièces, notamment le transfert de pièces à stabilité précaire.

Dans de nombreux domaines et plus particulièrement en verrerie, les pièces sont fabriquées dans des installations travaillant 24 heures sur 24 pendant plusieurs années.

C'est le cas par exemple de pièces en verre telles que des bouteilles, des flacons, des verres.

Ces pièces sont mises en forme puis passent dans des arches de recuisson pour supprimer les contraintes résiduelles induites lors de la mise en forme. Les pièces sont fabriquées en grand nombre et déposées en sortie sur des tapis de grande largeur.

Ces tapis sont métalliques pour résister aux températures des pièces en sortie de fabrication. Ils sont constitués de mailles métalliques et tendus entre des rouleaux d'entraînement.

En sortie de ces tapis, il se pose un problème, celui du transfert de ces pièces du tapis métallique sur d'autres convoyeurs, surtout que le système comprend généralement un passage d'un tapis à multiples rangées parallèles vers un ou des convoyeurs du type monofile.

La difficulté est encore augmentée par le fait que les pièces sont généralement à stabilité précaire, due à la forme de la pièce elle-même dont la base est étroite et/ou du fait que le centre de gravité est haut.

Il faut donc d'une part combler le gap entre le tapis qui comporte à son extrémité un rayon généralement de fort diamètre et le nouveau convoyeur et d'autre part, il faut tenir compte de l'instabilité des pièces.

Actuellement, des systèmes vibrants sont couramment utilisés mais ne donnent pas satisfaction. Dans le cas où il se produit une chute d'une des pièces, compte tenu de la proximité de celles-ci sur le tapis, c'est un grand nombre de pièces qui choit. De fait, l'opérateur débarrasse le système au plus vite, jetant les pièces brisées, pour permettre à la production en continu de se poursuivre.

Ce point de passage est souvent le lieu de chutes, ce qui diminue le rendement de production et nécessite régulièrement une intervention d'un opérateur et dans tous les cas la surveillance en continu.

Les dispositifs vibratoires connus consistent en une plaque mise en vibration par des moyens adaptés, généralement électromagnétiques, plaque sur laquelle les pièces sont poussées par le tapis.

Un dispositif vibratoire est connu par le document US-B1-6 182 718.

Dès lors, les vibrations provoquent le déplacement des pièces prises en charge. Néanmoins, on constate de nombreuses chutes. Celles-ci sont sans doute dues à une amplification des vibrations le long du chemin de translation des pièces.

De fait, pour certaines pièces à l'équilibre plus précaire, cette amplification conduit à des chutes inévitables.

Un autre problème est aussi dû au fait que le tapis à mailles métalliques conserve dans certains cas des bris de verre qui font saillie et peuvent endommager la plaque supportant les pièces lors de leur passage.

Ce problème est également à solutionner.

C'est l'objet de l'invention de proposer un dispositif à sole vibrante pour le transfert de pièces, notamment à équilibre précaire qui permet de pallier les problèmes des dispositifs de l'art antérieur.

Ce dispositif à sole vibrante est maintenant décrit en détail en regard des dessins annexés sur lesquels les différentes figures montrent un mode de réalisation préférentiel, non limitatif.

Les différentes figures représentent :
- figure 1, une vue schématique d'une installation incluant le dispositif selon l' invention,
- figure 2, une vue en perspective du dispositif isolé,
- figure 3, une vue en élévation latérale du dispositif,
- figure 4, une vue de face de ce même dispositif, et
- figure 5, une vue de détail du pont de passage.

Pour l'ensemble de la description, il a été choisi un cas d'application particulier, non limitatif, qui concerne un four de verrerie avec une arche de recuisson 10, en sortie de laquelle des pièces 12, en l'occurrence des flacons, sont disposées sur l'ensemble de la surface d'un tapis 14 à mailles métalliques d'un convoyeur 16.

Les flacons se déplacent suivant la flèche L.

Ces flacons doivent passer de ce tapis 14 à un convoyeur 18 monofile dont la vitesse, supérieure à celle du tapis 14, est telle qu'il absorbe le débit de ce tapis 14. Ce convoyeur est disposé transversalement suivant le sens de la flèche T.

Entre le convoyeur 16 et le convoyeur 18, il est disposé un dispositif de transfert 20 à sole vibrante selon la présente invention.

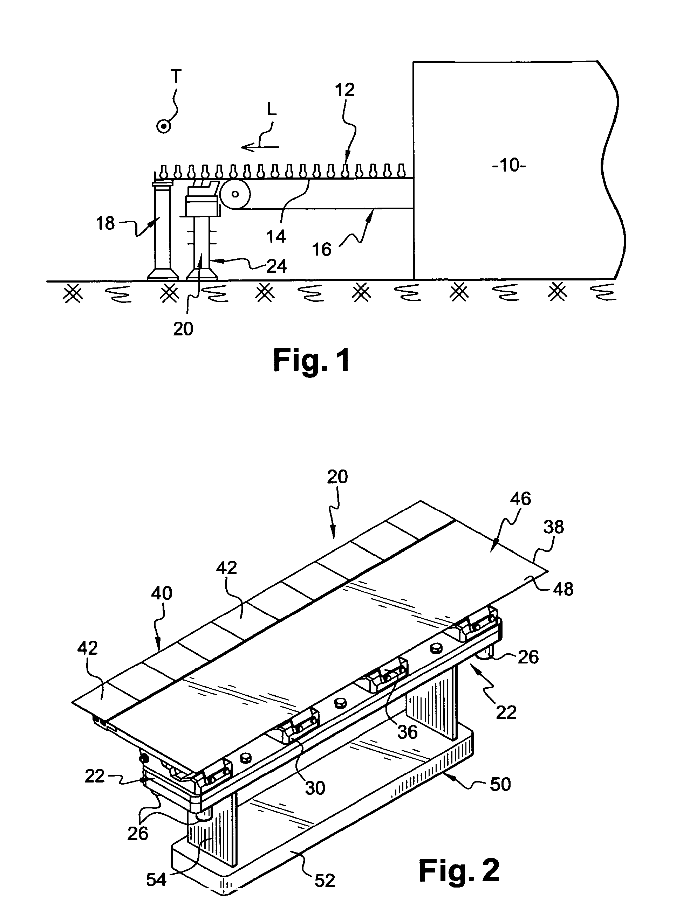

Ce dispositif de transfert est représenté en perspective sur la figure 2. Il est précisé qu'il s'agit là d'un module car dans les installations de verrerie comme celle qui est retenue, la largeur du tapis 14 est généralement telle qu'il faut juxtaposer plusieurs modules. La limite en largeur des modules n'est pas dictée par la mécanique mais par des considérations de construction qui apparaîtront à la lecture de la description qui va suivre.

Ce dispositif de transfert 20 comprend un bâti 22 apte à reposer sur un châssis 24, fixé au sol et visible sur la figure 1.

Le bâti est muni de moyens 26 support isolants interposés entre ledit bâti 22 et le châssis 24, ces moyens étant du type plots en élastomère.

Le bâti 22 est rigide mécaniquement.

Sur ce bâti, des moyens 28 vibrateurs, dans ce cas des moyens vibrateurs électromagnétiques à bobine, non visible sur les dessins. Ces moyens comprennent un socle 30 solidaire du bâti incluant la bobine, l'axe 32 de cette bobine étant incliné et entraînant un support 34 monté sur des lamelles 36 élastiques, ceci de façon connue.

Néanmoins, dans les agencements connus, l'axe virtuel qui prolonge l'axe 32 doit normalement couper l'élément qu'il doit mettre en vibration par son centre de gravité.

Or il faut aussi constater que le tapis, enroulé autour de son tambour occupe une place telle qu'il est impossible de positionner les moyens vibrateurs de façon adaptée, l'axe 32 ne pouvant pas passer par le centre de gravité de l'élément qu'il doit mettre en vibration.

C'est ce qui explique le déplacement vers l'aval des moyens vibrateurs et de fait, il apparaît que ce déplacement provoque une variation de l'amplitude des vibrations générées en fonction de la localisation.

Dans cet agencement, lorsque la bobine est alimentée électriquement, l'axe de la bobine subit des translations à la fréquence de la bobine, mouvements qui sont transmis au support.

Il est à remarquer que l'ensemble des paramètres retenus permettent le fonctionnement pour un rapport poids des objets en présence / puissance des vibrateurs. Si l'on considère l'exemple retenu de la verrerie, on comprend que les fabrications puissent traiter des flacons de petites dimensions pendant une période et des flacons de plus grandes dimensions la période suivante puisque ces unités travaillent en continu, au gré des commandes. La charge à transférer du tapis grâce à la sole vibrante varie mais il faut prévoir les paramètres aptes à traiter les différents produits à condition qu'ils restent dans une gamme de charge donnée.

Dans le mode de réalisation présenté, le module du dispositif de transfert comporte quatre moyens vibrateurs électromagnétiques qui doivent être synchronisés. De fait, la multiplication des moyens électromagnétiques peut engendrer des complications dans la synchronisation. C'est une des raisons qui conduit à concevoir de préférence des modules qui sont ensuite juxtaposés suivant la largeur du tapis 14 de sortie du convoyeur 16.

Dans le mode de réalisation retenu pour la présente invention, les vibrateurs d'un même module sont pilotés par une platine unique qui gère l'ensemble des vibrateurs.

Le support 34 est adapté pour recevoir une sole 38 de grande rigidité et d'un poids réduit, les alliages d'aluminium étant particulièrement adaptés pour cet usage.

Ainsi, le différentiel de poids entre cette sole 38 et le bâti 22 permet un parfaite restitution des vibrations engendrées par les moyens 28 vibrateurs à ladite sole.

La sole 38 est complétée par un élément 40 de jonction, réalisé en plusieurs lames 42. Cet élément de jonction est solidaire de la sole et se prolonge à proximité immédiate du tapis 14, exactement dans le même plan en sorte d'assurer une continuité.

La liaison entre l'élément de jonction et la sole est particulière en ce sens qu'elle est de type magnétique.

Ainsi, chaque lame est en matériau ferromagnétique, par exemple de l'acier et subit l'action d'aimants 44 liés à ladite sole.

De fait, sous l'action d'un corps étranger solidaire du tapis 14 par exemple, corps étranger qui viendrait à heurter une des lames, celle-ci peut se soulever pour ne pas être dégradée. L'attraction magnétique assure la remise en place de la lame dès l'obstacle passé.

Chaque lame est de plus biseautée, en sorte de se juxtaposer au plus près du tapis 14.

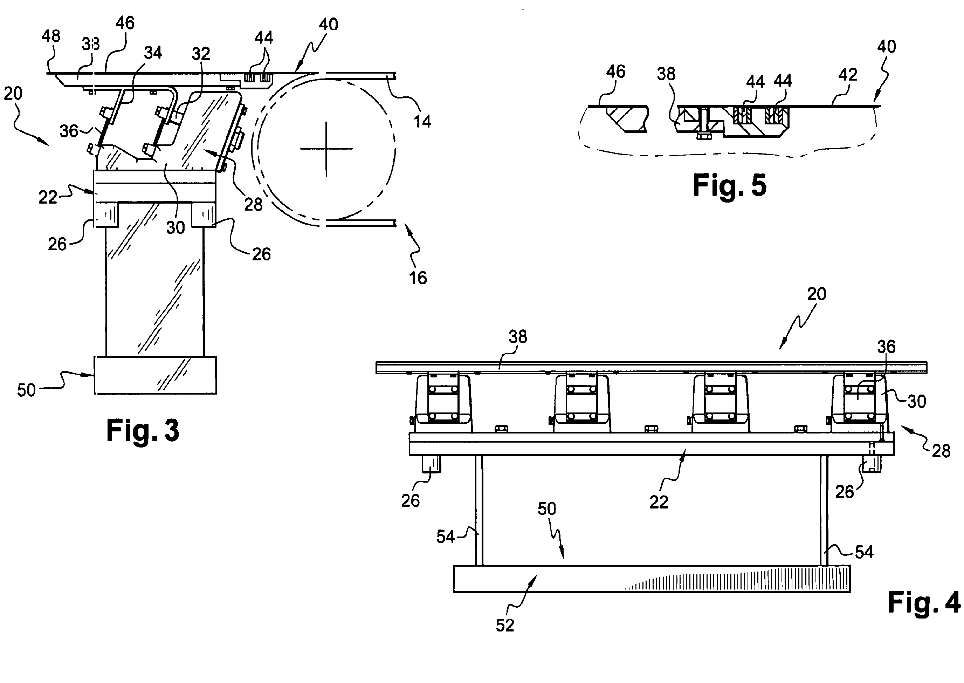

Sur l'ensemble de la sole, il est prévu de façon avantageuse un revêtement 46 qui assure plusieurs fonctions. Il est identifié sur la figure 5 mais difficilement visible compte tenu de sa faible épaisseur.

Ce revêtement évite l'usure de la sole et surtout le marquage des produits par l'aluminium lors du transfert par vibration des pièces.

Ce revêtement est aussi isophonique.

De plus, ce revêtement se prolonge en aval pour dépasser de la sole 38 et former une lèvre 48. Cette lèvre assure la continuité du plan du dispositif de transfert avec le convoyeur 18.

Selon la présente invention, le dispositif de transfert comprend un stabilisateur inertiel 50.

Ce stabilisateur inertiel est constitué d'une masse 52 reliée au bâti 22 de façon rigide, dans le cas présent par des bras 54.

Cette masse est distincte du bâti 22 et agit comme un contre-poids par l'intermédiaire des bras 54 qui jouent le rôle de bras de levier par déport, augmentant son action dans un encombrement limité.

De façon préférentielle, la masse 52 est disposée en dessous des points d'appui du bâti 22 sur le châssis 24, points d'appui constitués concrètement dans l'invention par les plots 26.

Le dispositif de transfert selon l'invention fonctionne de la façon indiquée ci-après.

Les moyens 28 vibrateurs provoquent la mise en vibration de la sole 38 avec une fréquence comprise entre 20 et 120 Hz pour donner un ordre d'idées.

Ces microvibrations assurent le déplacement des pièces disposées sur la sole dans le sens de l'axe 32, suivant la direction L.

A l'oeil nu, le déplacement des pièces donne l'impression de s'effectuer par glissement.

Les pièces provenant du tapis 14 progressent jusqu'à passer sur les lames 42. Ces lames solidaires de la sole 38 vibrent de la même façon. Ces vibrations provoquent donc le déplacement des pièces de façon linéaire sur le revêtement 46.

La vitesse de déplacement est constante puisque la fréquence de vibration est constante et que les pièces sont identiques.

Il est bien entendu prévu, de façon normale dans ce type d' installation, une parfaite horizontalité des différents éléments de la chaîne.

Le stabilisateur inertiel joue un rôle particulièrement remarquable et on constate que les amplitudes des vibrations restent constantes au moins sur la distance concernée, à savoir la longueur de la sole, quelques dizaines de centimètres pour donner un ordre de grandeur.

Dans le mode de réalisation préférentiel, on constate que la disposition de la masse sous les points d'appui 26, la masse 52, de poids important, le tout lié à sa disposition à distance grâce aux bras 54, disposition qui renforce son action, est d'une très grande efficacité.

Ceci conduit à un parfait maintien des pièces en équilibre stable durant le déplacement sur la sole sans engendrer de chutes des pièces, même avec les pièces les plus instables. Des essais ont même permis de faire progresser des bouteilles à l'envers, c'est-à-dire reposant sur la sole par leurs goulots, sans provoquer de chutes.

En sortie de sole, les pièces passent sur la lèvre 48 qui assure la continuité avec le convoyeur 18 monofile. Les pièces sont alors entraînées sans problème dans le sens transversal.

On constate que le dispositif de transfert selon la présente invention permet de pallier les problèmes qui avaient été évoqués en préambule.

## Revendications

1. Dispositif de transfert à sole (38) vibrante comprenant un bâti (22) comportant des moyens (28) vibrateurs de mise en vibration de ladite sole vibrante, des moyens (26) supports, isolants, interposés entre ledit bâti (22) et un châssis (24), **caractérisé en ce qu'**il comprend un stabilisateur inertiel (50) comprenant une masse (52) disposée en dessous et solidaire du bâti.

2. Dispositif de transfert selon la revendication 1, **caractérisé en ce que** la masse (52) comprend des bras (54) solidaires dudit bâti.

3. Dispositif de transfert selon la revendication 1 ou 2, **caractérisé en ce que** la masse (52) est disposée en dessous des moyens (26) supports.

4. Dispositif de transfert selon l'une quelconque des revendications précédentes, **caractérisé en ce que** les moyens (28) vibrateurs sont des moyens électromagnétiques avec un socle (30) solidaire du bâti incluant une bobine, l'axe (32) de cette bobine étant incliné et entraînant un support (34) monté sur des lamelles (36) élastiques, ledit support recevant la sole (38) vibrante.

5. Dispositif de transfert selon l'une quelconque des revendications précédentes, **caractérisé en ce que** la sole (38) comporte un élément (40) de jonction, réalisé en plusieurs lames (42).

6. Dispositif de transfert selon la revendication 5, **caractérisé en ce qu**'il comprend une liaison magnétique entre l'élément (40) de jonction et la sole (38) (44) et chaque lame étant en matériau ferromagnétique.

7. Dispositif de transfert selon l'une quelconque des revendications précédentes, **caractérisé en ce que** la sole (38) comprend un revêtement (46) anti-usure et isophonique.

8. Dispositif de transfert selon la revendication 7, **caractérisé en ce que** le revêtement (46) se prolonge vers l'aval de la sole et forme une lèvre (48) de jonction.

9. Installation de transfert incluant au moins deux dispositifs de transfert selon l'une quelconque des revendications précédentes, juxtaposés.

## Claims

1. Transfer device with a vibrating sole (38) comprising a frame (22) having vibrating means (28) for putting said vibrating sole in vibration, insulating support means (26) interposed between said frame (22)and a chassis (24), **characterised in that** it comprises an inertial stabiliser (50) comprising a mass (52) disposed below and integral with the frame.

2. Transfer device according to claim 1, **characterised in that** the mass (52) comprises arms (54) integral with said frame.

3. Transfer device according to claim 1 or 2, **characterised in that** the mass (52) is disposed below the support means (26).

4. Transfer device according to any one of the preceding claims, **characterised in that** the vibrating means (28) are electromagnetic means with a base (30) fixed to the frame including a coil, the spindle (32) of this coil being inclined and driving a support (34) mounted on elastic blades (36), said support receiving the vibrating sole (38).

5. Transfer device according to any one of the preceding claims, **characterised in that** the sole (38) comprises a joining element (40), produced as several sheets (42).

6. Transfer device according to claim 5, **characterised in that** it comprises a magnetic connection between the joining element (40) and the sole (38) (44) and each sheet being made from ferromagnetic material.

7. Transfer device according to any one of the preceding claims, **characterised in that** the sole (38) comprises anti-wear and isophonic cladding (46).

8. Transfer device according to claim 7, **characterised in that** the cladding (46) is extended towards the downstream end of the sole and forms a joining lip (48).

9. Transfer installation including at least two transfer devices according to any one of the preceding claims, juxtaposed.

## Patentansprüche

1. Transfervorrichtung mit Vibrationsplatte (38) umfassend einen Unterbau (22), der Vibrationsmittel (28), mit denen die Vibrationsplatte in Vibration versetzt wird, und isolierende, zwischen dem Unterbau (22) und einem Gestell (24) angeordnete Stützmittel (26) aufweist, **dadurch gekennzeichnet, dass** sie einen Trägheitsstabilisator (50) umfasst, welcher eine unterhalb des Unterbaus angeordnete und mit diesem verbundene Masse (52) umfasst.

2. Transfervorrichtung nach Anspruch 1, **dadurch gekennzeichnet, dass** die Masse (52) Arme (54) umfasst, die mit dem Unterbau verbunden sind.

3. Transfervorrichtung nach Anspruch 1 oder 2, **dadurch gekennzeichnet, dass** die Masse (52) unterhalb der Stützmittel (26) angeordnet ist.

4. Transfervorrichtung nach einem der vorstehenden Ansprüche, **dadurch gekennzeichnet, dass** die Vibrationsmittel (28) elektromagnetische Mittel sind, die einen mit dem Unterbau verbundenen Sockel (30) und eine Spule aufweisen, wobei die Achse (32) dieser Spule geneigt ist und eine auf elastischen Lamellen (36) montierte Stütze (34) antreibt, wobei die Stütze die Vibrationsplatte (38) aufnimmt.

5. Transfervorrichtung nach einem der vorstehenden Ansprüche, **dadurch gekennzeichnet, dass** die Platte (38) ein Verbindungselement (40) aufweist, welches aus mehreren dünnen Platten (42) hergestellt ist.

6. Transfervorrichtung nach Anspruch 5, **dadurch gekennzeichnet, dass** sie eine magnetische Verbindung zwischen dem Verbindungselement (40) und der Platte (38) umfasst, wobei die dünnen Platten jeweils aus einem ferromagnetischen Material bestehen.

7. Transfervorrichtung nach einem der vorstehenden Ansprüche, **dadurch gekennzeichnet, dass** die Platte (38) einen verschleißfesten und schalldämmenden Überzug (46) umfasst.

8. Transfervorrichtung nach Anspruch 7, **dadurch gekennzeichnet, dass** der Überzug (46) sich Richtung stromabwärts der Platte verlängert und eine Verbindungslippe (48) bildet.

9. Transferanlage mit mindestens zwei nebeneinander angeordneten Transfervorrichtungen nach einem der vorstehenden Ansprüche.
